(19) Europäisches Patentamt / European Patent Office / Office européen des brevets

(11) **EP 3 631 517 B1**

(12) **FASCICULE DE BREVET EUROPEEN**

(45) Date de publication et mention de la délivrance du brevet:
**31.03.2021 Bulletin 2021/13**

(21) Numéro de dépôt: **18734274.6**

(22) Date de dépôt: **29.05.2018**

(51) Int Cl.:
**G01T 3/00** *(2006.01)*

(86) Numéro de dépôt international:
**PCT/FR2018/000147**

(87) Numéro de publication internationale:
**WO 2018/220295 (06.12.2018 Gazette 2018/49)**

(54) **PROCÉDÉ ET DISPOSITIF DE TRAITEMENT DE SIGNAUX DE FLUX NEUTRONIQUE, PRODUIT PROGRAMME D'ORDINATEUR ET SYSTÈME DE CONTRÔLE-COMMANDE ASSOCIÉS**

VERFAHREN UND VORRICHTUNG ZUR VERARBEITUNG VON NEUTRONENFLUSSSIGNALEN, ZUGEHÖRIGES COMPUTERPROGRAMMPRODUKT UND STEUERSYSTEM

METHOD AND DEVICE FOR PROCESSING NEUTRON FLUX SIGNALS, ASSOCIATED COMPUTER PROGRAM PRODUCT AND CONTROL SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.05.2017 FR 1754713**

(43) Date de publication de la demande:
**08.04.2020 Bulletin 2020/15**

(73) Titulaire: **Commissariat à l'Energie Atomique et aux Energies Alternatives**
**75015 Paris (FR)**

(72) Inventeurs:
• **BAKKALI, Mounir**
  **92190 Meudon (FR)**
• **MONTAGU, Thierry**
  **92120 Montrouge (FR)**

(74) Mandataire: **Brevalex**
**95, rue d'Amsterdam**
**75378 Paris Cedex 8 (FR)**

(56) Documents cités:
**WO-A1-2017/051194     FR-A1- 2 910 689**

• **SAHA MANIKA ET AL: "Robustness and Sensitivity Metrics for Tuning the Extended Kalman Filter", IEEE TRANSACTIONS ON INSTRUMENTATION AND MEASUREMENT, IEEE SERVICE CENTER, PISCATAWAY, NJ, US, vol. 63, no. 4, 1 avril 2014 (2014-04-01), pages 964-971, XP011542302, ISSN: 0018-9456, DOI: 10.1109/TIM.2013.2283151 [extrait le 2014-03-06]**
• **SHUANG QIAO ET AL: "Neutron radiographic image restoration using BM3D frames and nonlinear variance stabilization", NUCLEAR INSTRUMENTS & METHODS IN PHYSICS RESEARCH. SECTION A: ACCELERATORS, SPECTROMETERS, DETECTORS, AND ASSOCIATED EQUIPMENT, vol. 789, 13 avril 2015 (2015-04-13), pages 95-100, XP029158713, ISSN: 0168-9002, DOI: 10.1016/J.NIMA.2015.04.005**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

## DOMAINE TECHNIQUE

La présente invention concerne un procédé de traitement d'un signal de flux neutronique associé à une voie de détection, le signal de flux neutronique étant représentatif d'un flux neutronique détecté par un détecteur de neutrons au cours du temps. L'invention concerne également un produit programme d'ordinateur, un dispositif de traitement et un système de contrôle-commande pour réacteur nucléaire.

L'invention s'applique au domaine du traitement de signaux de flux neutronique, et plus particulièrement au traitement de tels signaux pour des systèmes de contrôle-commande neutroniques.

## ÉTAT DE LA TECHNIQUE ANTÉRIEURE

Les systèmes de contrôle-commande pour réacteur nucléaire constituent un élément-clé pour l'exploitation des réacteurs nucléaires. En effet, de tels systèmes de contrôle-commande sont configurés pour assurer la surveillance de la distribution et de l'évolution de la puissance des réacteurs, et ce pour toutes les situations rencontrées dans les chaufferies nucléaires (civiles ou à propulsion nucléaire).

Le fonctionnement de tels systèmes de contrôle-commande repose sur des mesures du flux neutronique, réalisées hors du cœur d'un réacteur nucléaire ou, éventuellement, en son sein, ainsi que sur une estimation de la vitesse de variation de flux neutronique. Un tel flux varie typiquement entre $10^{-2}$ et $10^{14}$ neutrons.cm$^{-2}$.s$^{-1}$,

Actuellement, des systèmes de contrôle-commande dits « à grande dynamique » sont susceptibles de couvrir une telle plage de valeurs, notamment en mettant en œuvre un unique capteur sensible sur l'intégralité de la gamme de valeurs prises par le flux neutronique. Cet unique capteur est associé à un calculateur configuré pour déterminer la valeur du flux neutronique et sa vitesse de variation en fonction d'un signal émis par le capteur.

Chaque valeur du flux est associée à un mode de fonctionnement pour lequel une méthode de calcul optimale dudit flux à partir du signal émis par le détecteur a été définie. On distingue notamment un mode dit « impulsion » (dans lequel le flux est suffisamment faible pour distinguer la détection de neutrons individuels au cours du temps, typiquement jusqu'à $10^6$ neutrons.cm$^{-2}$.s$^{-1}$), un mode dit « courant » (pour les plus fortes valeurs de flux, typiquement à partir $10^7$ neutrons.cm$^{-2}$.s$^{-1}$), et un mode intermédiaire, dit « fluctuation K2 » ou « variance » (typiquement entre $8.10^4$ neutrons.cm$^{-2}$.s$^{-1}$ et $1.10^9$ neutrons.cm$^{-2}$.s$^{-1}$).

Un recouvrement réglementaire d'au moins une décade est obligatoire entre ces trois modes de fonctionnement, c'est-à-dire qu'il existe deux plages de valeurs de flux neutronique, dont l'étendue est d'au moins une décade, et dans chacune desquelles le calculateur est propre à calculer le flux de neutrons et sa vitesse de variation selon deux méthodes de calcul optimales différentes (impulsion et fluctuation, ou fluctuation et courant).

Toutefois, de tels systèmes de contrôle-commande à grande dynamique ne donnent pas entière satisfaction.

En effet, dans de tels systèmes de contrôle-commande à grande dynamique, le capteur est séparé du calculateur par un câble présentant une longueur typique de l'ordre de la centaine de mètres. Une telle longueur de câble conduit à une atténuation et une déformation du signal issu du capteur, ce qui a pour effet de dégrader le rapport signal sur bruit, et de réduire le recouvrement entre les modes de fonctionnement du calculateur. Ceci nuit à la précision et à la fiabilité du système de contrôle-commande Le document FR2910689 divulgue un procédé de traitement d'un signal de flux neutronique associé à une voie de détection, le signal de flux neutronique étant représentatif d'un flux neutronique détecté par un détecteur de neutrons au cours du temps, le procédé comportant : la transformation du signal de flux neutronique par une transformée stabilisatrice de variance, pour générer un signal transformé; le filtrage du signal transformé par un filtre pour générer un signal filtré; la transformation inverse du signal filtré par une transformée réciproque de la transformée stabilisatrice de variance, pour générer un signal de flux neutronique filtré. Quant à l'article de Manika Saha et al., intitulé Robustness and Sensitivity Metrics for Tuning the Extended Kalman Filter, il décrit une métrique de robustesse et une métrique de sensibilité qui peuvent être utilisées pour déterminer une combinaison appropriée des paramètres de réglage d'un filtre de Kalman étendu.

Un but de l'invention est donc de proposer un système de contrôle-commande plus fiable, apte à fournir des mesures de flux neutronique et de vitesse de variation du flux neutronique plus précises que les systèmes de contrôle-commande actuels.

## EXPOSÉ DE L'INVENTION

A cet effet, l'invention a pour objet un procédé du type précité, le procédé étant tel qu'il est défini dans la revendication 1 et comportant étapes suivantes mises en œuvre par un calculateur (10):

- la transformation du signal de flux neutronique par une transformée stabilisatrice de variance, pour générer un signal transformé ;
- la mise en œuvre d'un test sur au moins une grandeur de test dont la valeur dépend du signal transformé ;
- en fonction de l'issue du test, la sélection d'une valeur d'au moins un paramètre adaptable d'un filtre prédéterminé parmi une pluralité de valeurs distinctes ;
- le filtrage du signal transformé par le filtre pour générer un signal filtré, chaque paramètre adaptable du filtre présentant la valeur sélectionnée ;

- transformation inverse du signai filtré par une transformée réciproque de la transformée stabilisatrice de variance, pour générer un signal de flux neutronique filtré.

En effet, grâce au recours à la transformée stabilisatrice de variance, l'impact de la dégradation du signal qui est induite par le câble est réduite. En outre, la mise en œuvre d'un test autorise le recours à un filtre dont les paramètres sont choisis en fonction des caractéristiques du signal de flux neutronique. Ceci est avantageux en cas de fluctuations temporelles rapides du signal de flux neutronique, par exemple lors d'un changement brutal du mode de fonctionnement du réacteur nucléaire. Dans ce cas, les paramètres du filtre sont choisis pour répondre au mieux audites fluctuations du signal de flux neutronique.

Le procédé selon l'invention conduit donc à une mesure du flux neutronique et de la vitesse de variation du flux neutronique qui est plus fiable et plus précise qu'avec les procédés de l'état de la technique.

Suivant d'autres aspects avantageux de l'invention, le procédé comporte une ou plusieurs des caractéristiques suivantes, prise(s) isolément ou suivant toutes les combinaisons techniquement possibles :

- le filtre est un filtre de Kalman, le paramètre adaptable étant une matrice de covariance de bruit du modèle d'état sous-tendant le filtre de Kalman ;
- le modèle d'état présente une équation d'état de la forme :

$$X_k = AX_{k-1} + W_k$$

où $X_k$ est la valeur prise, à un instant de calcul k, par un vecteur d'état du filtre de Kalman, le signal filtré dépendant d'au moins une composante du vecteur d'état ;
$X_{k-1}$ est la valeur prise, à l'instant précédent k-1, par le vecteur d'état ;
A est une matrice de transition d'état prédéterminée ;
$W_k$ est une réalisation, à l'instant k, d'un vecteur de bruit présentant une matrice de covariance de bruit dont la valeur est la valeur sélectionnée au cours de la sélection ;

- le vecteur d'état est un vecteur à trois composantes de la forme : $X_k = [\mu_k, v_k, b_k]^T$,

où $X_k$ la valeur prise par le vecteur d'état (X) à l'instant k ;
$\mu_k$ est la valeur moyenne du signal transformé à l'instant k ;
$v_k$ est un accroissement de l'espérance $\mu_k$ à l'instant k ;

$b_k$ est un biais sur l'accroissement $v_k$ à l'instant k ; et
$^T$ est l'opérateur « transposée »,
et dans lequel la matrice de transition d'état s'écrit :

$$A = \begin{bmatrix} 1 & a & b \\ 0 & 1 & c \\ 0 & 0 & 1 \end{bmatrix},$$

où a, b et c sont des réels prédéterminés ;

- la mise en œuvre d'un test comprend la comparaison, pour un instant de calcul indexé par un entier k, de la valeur prise par une première grandeur de test et une deuxième grandeur de test à un seuil prédéterminé, et la sélection d'une première matrice de covariance de bruit si la première grandeur de test et la deuxième grandeur de test sont chacune inférieure ou égale au seuil prédéterminé, et la sélection d'une deuxième matrice de covariance de bruit distincte de la première matrice de covariance de bruit sinon,
la première grandeur de test valant: $g_{1,k} = \max$ $(g_{1,k-1} + e_k - \theta \; ; \; 0)$, et la deuxième grandeur de test valant : $g_{2,k} = \max (g_{2,k-1} - e_k - \theta \; ; \; 0)$,
où $g_{1,k-1}$ est la valeur prise par la première grandeur de test à l'instant précédent k-1 ;
$g_{2,k-1}$ est la valeur prise par la deuxième grandeur de test à l'instant précédent k-1 ;
max est l'opérateur « maximum » ;
$\theta$ est un réel positif prédéterminé ; et
$e_k$ est une erreur de prédiction égale à la différence entre une valeur prédite du signal transformé pour l'instant k, générée au cours de l'étape de filtrage, et la valeur prise par le signal transformé à l'instant k ;

- pour une voie de détection associée à un mode dit courant, la transformée stabilisatrice de variance s'écrit :

$$h(\lambda) = \frac{2}{\alpha_C} \sqrt{\alpha_C \lambda + \beta_C}$$

où h est la transformée stabilisatrice de variance ;
$\lambda$ est le signal de flux neutronique ; et
$\alpha_C$ et $\beta_C$ sont des réels strictement positifs prédéterminés ; la transformée réciproque s'écrivant :

$$h^{-1}(x_i) = \frac{\alpha_C}{4} x_i^2 - \frac{\beta_C}{\alpha_C}$$

où $h^{-1}$ est la transformée réciproque de la transformée stabilisatrice de variance ; et

$x_i$ est une composante du signal filtré ;

- pour une voie de détection associée à un mode dit fluctuation K2, la transformée stabilisatrice de variance s'écrit :

$$h(\lambda)=\frac{1}{\sqrt{\alpha_F}}\,\text{asinh}\left(\frac{2\alpha_F\lambda+\gamma_F}{\sqrt{\Delta_F}}\right)$$

où h est la transformée stabilisatrice de variance ;
$\lambda$ est le signal de flux neutronique ;
$\Delta_F$ est un réel défini par $\Delta=4\gamma_F\alpha_F-\beta_F^2$ ;
$\alpha_F$, $\beta_F$ et $\gamma_F$ sont des réels strictement positifs prédéterminés ; et asinh est la fonction arcsinus hyperbolique ;
la transformée réciproque s'écrivant :

$$h^{-1}(x_i)=\frac{\sqrt{\alpha_F\Delta_F}\,\sinh(x_i)-\beta_F}{2\alpha_F}$$

où $h^{-1}$ est la transformée réciproque de la transformée stabilisatrice de variance ;
$x_i$ est une composante du signal filtré ; et
sinh est la fonction sinus hyperbolique ;

- pour une voie de détection associée à un mode dit fluctuation K3, la transformée stabilisatrice de variance s'écrit :

$$h(\lambda)=\frac{1}{\sqrt{\beta_{K3}}}\,\text{asinh}\left(\frac{2\beta_{K3}\lambda+\delta_{K3}}{\sqrt{\Delta_{K3}}}\right)$$

où h est la transformée stabilisatrice de variance ;
$\lambda$ est le signal de flux neutronique ;
$\Delta_{K3}$ est un réel défini par $\Delta_{K3}=4\delta_{K3}\beta_{K3}-\gamma_{K3}^2$ ;
$\beta_{K3}$, $\gamma_{K3}$ et $\delta_{K3}$ sont des réels strictement positifs prédéterminés ; et asinh est la fonction arcsinus hyperbolique ;
la transformée réciproque s'écrivant :

$$h^{-1}(x_i)=\frac{\sqrt{\beta_{K3}\Delta_{K3}}\,\sinh(x_i)-\gamma_{K3}}{2\beta_{K3}}$$

où $h^{-1}$ est la transformée réciproque de la transformée stabilisatrice de variance ;
$x_i$ est une composante du signal filtré ; et
sinh est la fonction sinus hyperbolique ;

- pour la voie de détection associée au mode fluctuation K3, le signal de flux neutronique est le cumulant d'ordre 3 d'un signal d'entrée proportionnel à un signal de détection généré par le détecteur ;
- une estimée du vecteur d'état obtenue en sortie du filtre de Kalman constitue le signal filtré, et dans lequel le vecteur obtenu en appliquant la transformée réciproque à chaque composante du signal filtré constitue le signal de flux neutronique filtré,

le procédé comportant le calcul du flux neutronique détecté par le détecteur selon :

$$\varphi_k=\rho.h^{-1}(\widehat{\mu_k})$$

où $\varphi_k$ est la valeur du flux neutronique à l'instant k ;
$\rho$ est un coefficient d'étalonnage prédéterminé ;
$h^{-1}$ est la transformée réciproque de la transformée stabilisatrice de variance ; et
$\widehat{\mu_k}$ est la première composante du signal filtré à l'instant k ;

- pour chaque voie de détection, la comparaison de la valeur calculée du flux neutronique à une plage de flux neutronique prédéterminée associée à ladite voie de détection,
la valeur du flux neutronique étant prise comme étant, parmi l'ensemble des valeurs calculées de flux neutroniques, la valeur calculée du flux neutronique qui appartient à la plage de flux neutronique prédéterminée associée à la voie de détection correspondante ;
- une estimée du vecteur d'état obtenue en sortie du filtre de Kalman constitue le signal filtré, le vecteur obtenu en appliquant la transformée réciproque à chaque composante du signal filtré constituant le signal de flux neutronique filtré,
le procédé comportant le calcul d'une vitesse de variation du flux neutronique détecté par le détecteur (4), pour une voie de détection non associée à un mode dit courant, selon :

$$VV_k=\frac{60\left(h^{-1}(\widehat{v_k})-h^{-1}(\widehat{b_k})\right)}{T_e\ln 2}$$

où $VV_k$ est la valeur de la vitesse de variation du flux neutronique à l'instant k ;
$\rho$ est un coefficient d'étalonnage prédéterminé ;
$h^{-1}$ est la transformée réciproque de la transformée stabilisatrice de variance ;
$\widehat{v_k}$ est la deuxième composante du signal filtré à l'instant k ;

$\widehat{b_k}$ est la troisième composante du signal filtré à l'instant k ;

$T_e$ est la période d'échantillonnage du signal de flux neutronique ; et

In est la fonction « logarithme népérien » ;

- une estimée du vecteur d'état obtenue en sortie du filtre de Kalman constitue le signal filtré, le vecteur obtenu en appliquant la transformée réciproque à chaque composante du signal filtré constituant le signal de flux neutronique filtré,

le procédé comportant le calcul d'une vitesse de variation du flux neutronique détecté par le détecteur (4), pour une voie de détection associée à un mode dit courant, selon :

$$VV_k = \frac{60\left(\widehat{v_k} - \widehat{b_k}\right)}{(T_e \ln 2)\widehat{\mu_k}}$$

où $VV_k$ est la valeur de la vitesse de variation du flux neutronique à l'instant k;

ρ est un coefficient d'étalonnage prédéterminé ;

$h^{-1}$ est la transformée réciproque de la transformée stabilisatrice de variance ;

$\widehat{\mu_k}$ est la première composante du signal filtré à l'instant k ;

$\widehat{v_k}$ est la deuxième composante du signal filtré à l'instant k ;

$\widehat{b_k}$ est la troisième composante du signal filtré à l'instant k ;

$T_e$ est la période d'échantillonnage du signal de flux neutronique ; et

In est la fonction « logarithme népérien » ;

- au moins un filtre de Kalman comporte un lisseur de Kalman à pas fixe. En outre, l'invention a pour objet un produit programme d'ordinateur étant tel qu'il est défini dans la revendication 13 et comportant des instructions de code de programme qui, lorsqu'elles sont exécutées par un ordinateur, mettent en œuvre le procédé tel que défini ci-dessus.

En outre, l'invention a pour objet un dispositif de traitement d'au moins un signal de flux neutronique associé à une voie de détection, tel qu'il est défini dans la revendication 14, le signal de flux neutronique étant issu d'un détecteur de neutrons et étant représentatif d'un flux neutronique détecté par le détecteur au cours du temps, le dispositif de traitement étant caractérisé en ce qu'il comporte un calculateur configuré, pour chaque voie de détection, pour :

- appliquer une transformée stabilisatrice de variance au signal de flux neutronique, pour générer un signal transformé ;

- mettre en oeuvre un test sur au moins une grandeur de test dont la valeur dépend du signal transformé ;
- sélectionner, en fonction de l'issue du test, une valeur d'au moins un paramètre adaptable d'un filtre prédéterminé parmi une pluralité de valeurs distinctes ;
- mettre en œuvre le filtre sur le signal transformé pour générer un signal filtré, chaque paramètre adaptable du filtre présentant la valeur sélectionnée ;
- appliquer une transformée réciproque de la transformée stabilisatrice de variance au signal filtré, pour générer un signal de flux neutronique filtré ; et
- calculer le flux neutronique détecté par le détecteur et/ou la vitesse de variation du flux neutronique détecté par le détecteur à partir du signal de flux neutronique filtré.

En outre, l'invention a pour objet un système de contrôle-commande pour réacteur nucléaire comportant au moins un détecteur de neutrons configuré pour détecter un flux neutronique et pour délivrer un signal de flux neutronique représentatif du flux neutronique détecté, et un dispositif de traitement tel que défini ci-dessus pour calculer le flux neutronique détecté par le détecteur et/ou la vitesse de variation du flux neutronique détecté par le détecteur à partir du signal de flux neutronique.

## BRÈVE DESCRIPTION DES DESSINS

L'invention sera mieux comprise à l'aide de la description qui va suivre, donnée uniquement à titre d'exemple non limitatif et faite en se référant aux dessins annexés sur lesquels :

- la figure 1 est une représentation schématique d'un système de contrôle-commande selon l'invention ; et
- la figure 2 est un ordinogramme représentant le fonctionnement du système de contrôle-commande de la figure 1.

## EXPOSÉ DÉTAILLÉ DE MODES DE RÉALISATION PARTICULIERS

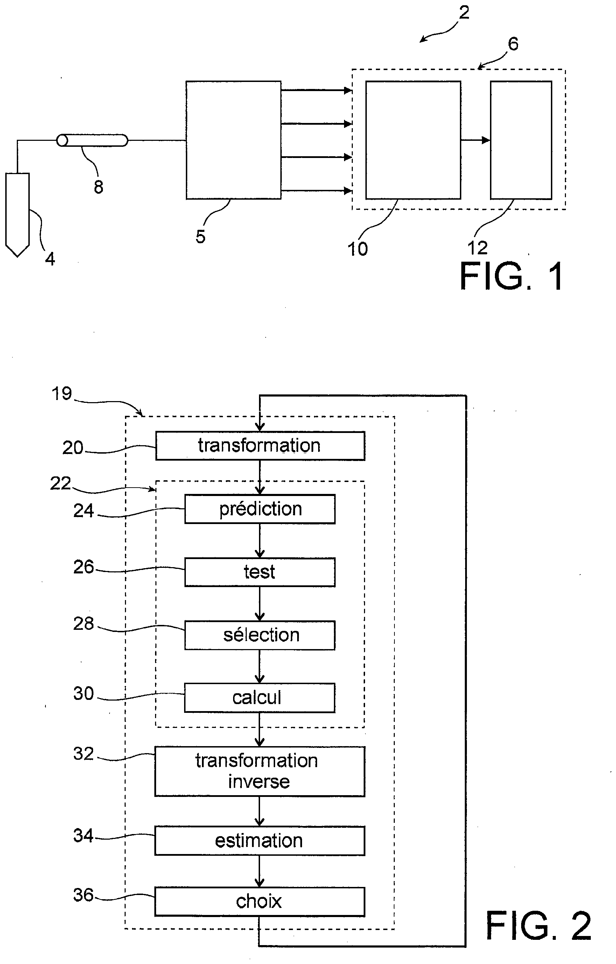

Un système de contrôle-commande 2 pour réacteur' nucléaire est illustré par la figure 1.

Le système de contrôle-commande 2 est notamment configuré pour surveiller l'évolution de la puissance d'au moins un réacteur nucléaire à surveiller associé.

Le système de contrôle-commande 2 comporte au moins un détecteur 4 de neutrons. Le système de contrôle-commande 2 comporte également un dispositif de prétraitement 5 connecté en série avec un dispositif de traitement 6. Le détecteur 4 est relié au dispositif de prétraitement 5 par une ligne de transmission 8.

Le détecteur 4 est, par exemple, une chambre à fission associée à un compteur proportionnel.

Le compteur proportionnel est un détecteur neutronique destiné à fonctionner pour des valeurs de flux correspondant au mode impulsion. La chambre à fission est un détecteur neutronique dit « à grande dynamique », propre à fonctionner pour des valeurs de flux correspondant aux modes impulsion, fluctuation K2 et courant, ainsi qu'à un mode fluctuation K3 décrit ultérieurement.

Alternativement, le détecteur 4 est une chambre à fission seule.

Le détecteur 4 est, par exemple, disposé à proximité d'un cœur du réacteur nucléaire à surveiller, ou encore au sein du cœur du réacteur nucléaire à surveiller.

Le détecteur 4 est configuré pour détecter un flux neutronique au cours du temps, et pour délivrer un signal de détection représentatif du flux neutronique détecté.

La ligne de transmission 8 est propre à acheminer le signal de détection depuis le détecteur 4 jusqu'au dispositif de prétraitement 5.

Le dispositif de prétraitement 5 est configuré pour générer, à partir du signal de détection, au moins un signal d'entrée pour le dispositif de traitement 6.

Chaque signal d'entrée généré par le dispositif de prétraitement 5 est associé à une voie de détection du dispositif de traitement 6.

Par exemple, comme illustré par la figure 1, le dispositif de prétraitement 5 est configuré pour générer quatre signaux d'entrée du dispositif de traitement 6. Dans ce cas, les quatre voie de détection sont respectivement appelées « impulsion », « fluctuation K2 », « fluctuation K3 » et « courant ». Comme cela sera décrit ultérieurement, chaque voie correspond à un traitement spécifique du signal d'entrée correspondant.

La voie impulsion est associée à un mode de fonctionnement dit « impulsion », correspondant à un flux neutronique vu par le détecteur 4 qui est inférieur ou égal à $10^6$ neutrons.cm$^{-2}$.s$^{-1}$.

La voie fluctuation K2 est associée à un mode de fonctionnement dit « fluctuation K2 », ou encore « variance », correspondant à un flux neutronique vu par le détecteur 4 qui est compris entre $8.10^4$ neutrons.cm$^{-2}$.s$^{-i}$ et $1.10^9$ neutrons.cm$^{-2}$.s$^{-1}$.

La voie fluctuation K3 est associée à un mode de fonctionnement dit « fluctuation K3 », correspondant à un flux neutronique vu par le détecteur 4 qui est compris entre $1.10^3$ neutrons.cm$^{-2}$.s$^{"1}$ et $1.10^9$ neutrons.cm$^{-2}$.s$^{-1}$,

En outre, la voie courant est associée à un mode de fonctionnement dit « courant », correspondant à un flux neutronique vu par le détecteur 4 qui est supérieur ou égal à $10^7$ neutrons.cm$^{-2}$.s$^{-1}$.

Par exemple, pour générer chaque signal d'entrée, le dispositif de prétraitement 5 est configuré pour d'abord amplifier le signal de détection, puis le dupliquer en un signal intermédiaire pour chaque voie de détection.

Par exemple, chaque signal intermédiaire est égal au signal de détection multiplié par un gain transimpédance du dispositif de prétraitement 5.

De façon optionnelle, pour chaque voie de détection, le dispositif de prétraitement 5 est configuré pour appliquer un prétraitement correspondant au signal intermédiaire afin de générer le signal d'entrée du dispositif de traitement 6.

Par exemple, pour la voie impulsion, le dispositif de prétraitement 5 est configuré pour amplifier le signal intermédiaire, puis pour mettre en œuvre une discrimination d'impulsions afin de générer le signal d'entrée pour ladite voie impulsion.

En outre, pour chacune parmi la voie fluctuation K2 et la voie fluctuation K3, le dispositif de prétraitement 5 est configuré pour modifier l'amplitude du signal intermédiaire afin d'obtenir un signal d'entrée dont l'amplitude appartient à un intervalle prédéterminé. Avantageusement, pour la voie fluctuation K2, le dispositif de prétraitement 5 est également configuré pour appliquer un filtrage passe-bande au signal intermédiaire. De préférence, le filtre-passe bande présente une bande-passante comprise entre 10 kHz et 500 kHz, par exemple comprise entre 15 kHz et 300 kHz.

Enfin, pour la voie courant, le dispositif de prétraitement 5 est configuré pour mettre en œuvre, sur le signal intermédiaire, un filtrage passe-bas afin d'obtenir le signal d'entrée correspondant à ladite voie courant. Par exemple, au cours d'un tel filtrage passe-bas, la fréquence de coupure est égale à 15 Hz (hertz).

Alternativement, en l'absence d'un tel prétraitement sur une voie de détection donnée, le signal intermédiaire correspondant constitue le signal d'entrée du dispositif de traitement 6 pour ladite voie de détection.

Le dispositif de traitement 6 est configuré pour calculer le flux neutronique détecté par le détecteur 4 et/ou la vitesse de variation du flux neutronique détecté par le détecteur 4, à partir du signal d'entrée reçu, pour chaque voie de détection, en provenance du dispositif de prétraitement 5.

En particulier, pour chaque voie de détection, le dispositif de traitement 6 est configuré pour recevoir le signal d'entrée correspondant et pour échantillonner ledit signal d'entrée.

Le dispositif de traitement 6 est également configuré pour appliquer, à chaque signal d'entrée échantillonné, une pluralité d'opérations prédéterminées telles que décrites ultérieurement.

En outre, le dispositif de traitement 6 est configuré pour déterminer le flux neutronique détecté par le détecteur 4 et/ou la vitesse de variation du flux neutronique détecté par le détecteur 4, à partir de résultats obtenus sur chaque voie de détection à l'issue desdites opérations prédéterminées.

Le dispositif de traitement 6 comprend un calculateur 10. De façon optionnelle, le dispositif de traitement 6 comprend également un afficheur 12.

Le calculateur 10 est configuré pour calculer le flux neutronique détecté par le détecteur 4 et/ou la vitesse de variation du flux neutronique détecté par le détecteur 4, à partir de chaque signal d'entrée.

En particulier, à partir de chaque signal d'entrée, le calculateur est configuré pour générer un signal de flux neutronique λ, représentatif du flux neutronique détecté par le détecteur 4. Le calculateur 10 est également configuré pour déterminer le flux neutronique détecté par le détecteur 4 et/ou la vitesse de variation du flux neutronique détecté par le détecteur 4, à partir de chaque signal de flux neutronique λ.

Le calculateur 10 est configuré pour recevoir chaque signal d'entrée et pour appliquer, à chaque signal d'entrée, un traitement associé afin de générer le signal de flux neutronique λ correspondant.

Plus précisément, pour la voie impulsion, le calculateur 10 est configuré pour estimer un taux de comptage du signal d'entrée correspondant sur une première fenêtre temporelle prédéterminée. Par taux de comptage, il est entendu, au sens de la présente invention, un nombre d'impulsions par unité de temps. Dans ce cas, pour la voie impulsion, le signal de flux neutronique λ représente le taux de comptage estimé au cours du temps.

Pour la voie fluctuation K2, le calculateur 10 est configuré pour calculer un cumulant d'ordre 2 du signal d'entrée correspondant afin d'obtenir le signal de flux neutronique λ. Par exemple, à un instant donné, le calculateur 10 est configuré pour calculer le signal de flux neutronique À à partir des N derniers échantillons du signal d'entrée, selon la formule suivante :

$$\lambda = \frac{1}{N(N-1)}\left[NS_2 - S_1^2\right]$$

où $S_j$ (avec j = 1 ou 2) est une quantité obtenue par :

$$S_j = \sum_{i=1}^{N} E_i^j,$$ $E_i$ étant le i-ième échantillon parmi les N derniers échantillons du signal d'entrée.

Dans ce cas, pour la voie fluctuation K2, le signal de flux neutronique λ représente le cumulant d'ordre 2 calculé au cours du temps.

Pour la voie fluctuation K3, le calculateur 10 est configuré pour calculer un cumulant d'ordre 3 du signal d'entrée correspondant afin d'obtenir le signal de flux neutronique λ. Par exemple, à un instant donné, le calculateur 10 est configuré pour calculer le signal de flux neutronique λ à partir des M derniers échantillons du signal d'entrée, selon la formule suivante :

$$\lambda = \frac{1}{M(M-1)(M-2)}\left[M^2 S_3 - 3M S_2 S_1 - 2S_1^3\right]$$

où $S_j$ (avec j = 1, 2 ou 3) est une quantité obtenue par :

$$S_j = \sum_{i=1}^{M} E_i^j,$$ $E_i$ étant le i-ième échantillon parmi les M derniers échantillons du signal d'entrée.

Dans ce cas, pour la voie fluctuation K3, le signal de flux neutronique λ représente le cumulant d'ordre 3 calculé au cours du temps.

Pour la voie courant, le calculateur 10 est configuré pour estimer une amplitude moyenne du signal d'entrée correspondant sur une deuxième fenêtre temporelle prédéterminée. Dans ce cas, pour la voie courant, le signal de flux neutronique λ représente l'amplitude estimée du signal d'entrée au cours du temps.

En outre, le calculateur 10 est configuré pour appliquer une transformée stabilisatrice de variance à chaque signal de flux neutronique λ pour générer un signal transformé. La transformée stabilisatrice de variance est notée h. En outre, le signal transformé est indifféremment noté h(λ) ou λ*.

Le calculateur 10 est également configuré pour appliquer, pour chaque voie de détection, un filtre au signal transformé λ* afin de générer un signal filtré. Le signal filtré est noté $\hat{X}$.

Un tel filtre est, par exemple, un filtre de Kalman. Selon un autre exemple, un tel filtre est un filtre fondé sur la méthode des moindres carrés, par exemple une régression linéaire.

En outre, pour chaque voie de détection, le calculateur 10 est configuré pour appliquer, au signal filtré $\hat{X}$ correspondant, une transformée réciproque de la transformée stabilisatrice de variance, afin de générer un signal de flux neutronique filtré. La transformée réciproque est notée $h^{-1}$. En outre, le signal de flux neutronique filtré est indifféremment noté $h^{-1}(\hat{X})$ ou X*.

Le calculateur 10 est également configuré pour calculer le flux neutronique à partir du signal de flux neutronique filtré X*. Avantageusement, le calculateur 10 est également configuré pour calculer la vitesse de variation du flux neutronique à partir du signal de flux neutronique filtré X*. Le flux neutronique calculé est noté φ. En outre, la vitesse de variation du flux neutronique calculée est notée VV.

L'afficheur 12 est propre à afficher le flux neutronique φ calculé par le calculateur 10. De préférence, l'afficheur 12 est également propre à afficher la vitesse de variation VV du flux neutronique calculée par le calculateur 10.

Avantageusement, l'afficheur 12 est également configuré pour afficher une alerte si le flux neutronique calculé φ dépasse un seuil prédéterminé de flux, et/ou si la vitesse de variation du flux neutronique calculée VV dépasse un seuil prédéterminé de vitesse de variation de flux.

Le fonctionnement du système de contrôle-commande 2 va maintenant être décrit, en référence à la figure 2.

Il est supposé que le filtre mis en œuvre par le calculateur 10 est un filtre de Kalman.

En fonctionnement, le dispositif de prétraitement 5 reçoit le signal de détection en provenance du détecteur 4, par l'intermédiaire de la ligne de transmission 8.

Puis, le dispositif de prétraitement 5 génère, pour chaque voie de détection, un signal d'entrée pour le dispositif de traitement 6.

Le dispositif de traitement 6 échantillonne chaque signal d'entrée, puis le calculateur 10 du dispositif de traitement 6 met en œuvre, pour chaque voie de détection, le traitement prédéterminé correspondant pour générer un signal de flux neutronique $\lambda$ associé à ladite voie de détection. Le traitement associé à chaque voie de détection et permettant de générer chaque signal de flux neutronique $\lambda$ a été décrit précédemment.

Puis, le calculateur 10 met en œuvre, au cours d'instants de calculs successifs dans le temps, une boucle de calcul 19.

Les étapes de la boucle de calcul 19 vont être décrites pour un instant de calcul donné quelconque, indexé par un entier k, encore appelé « instant de calcul k ».

Transformation par une transformée stabilisatrice de variance

Au cours d'une étape de transformation 20 de la boucle de calcul 19, le calculateur 10 transforme le signal de flux neutronique $\lambda$ par la transformée stabilisatrice de variance h, pour générer le signal transformé $\lambda^*$. Une telle transformation réciproque est effectuée à chaque instant de calcul k.

La transformée stabilisatrice de variance h dépend de la voie de détection considérée du dispositif de traitement 6.

Pour la voie courant, la transformée stabilisatrice de variance s'écrit :

$$h(\lambda)=\frac{2}{\alpha_C}\sqrt{\alpha_C\lambda+\beta_C}$$

où $\alpha_C$ et $\beta_C$ sont des réels strictement positifs prédéterminés dépendant du système de contrôle-commande 2.

Pour la voie fluctuation K2, la transformée stabilisatrice de variance s'écrit :

$$h(\lambda)=\frac{1}{\sqrt{\alpha_F}}\mathrm{asinh}\left(\frac{2\alpha_F\lambda+\gamma_F}{\sqrt{\Delta_F}}\right)$$

où $\Delta_F$ est un réel positif défini par $\Delta_F=4\gamma_F\alpha_F-\beta_F^2$ ;

$\alpha_F$, $\beta_F$ et $\gamma_F$ sont des réels strictement positifs prédéterminés dépendant du système de contrôle-commande 2 ; et

asinh est la fonction arcsinus hyperbolique.

Pour la voie fluctuation K3, la transformée stabilisatrice de variance s'écrit :

$$h(\lambda)=\frac{1}{\sqrt{\beta_{K3}}}\mathrm{asinh}\left(\frac{2\beta_{K3}\lambda+\delta_{K3}}{\sqrt{\Delta_{K3}}}\right)$$

où $\Delta_{K3}$ est un réel positif défini par

$\Delta_{K3}=4\delta_{K3}\beta_{K3}-\gamma_{K3}^2$ ; et

$\beta_{K3}$, $\gamma_{K3}$ et $\delta_{K3}$ sont des réels strictement positifs prédéterminés dépendant du système de contrôle-commande 2.

Pour la voie impulsion, la transformée stabilisatrice de variance est, par exemple, une transformée d'Anscombe, une transformée de Haar-Fisz, ou toute autre transformée stabilisatrice de variance pour données dont les propriétés statistiques sont régies par la loi de Poisson.

La transformée stabilisatrice de variance h confère au signal transformé $\lambda^*$ une statistique gaussienne de variance R prédéterminée, qui autorise de modéliser le signal transformé $\lambda^*$ par un signal entaché d'un bruit gaussien de moyenne nulle et de variance R.

Filtrage

Puis, au cours d'une étape de filtrage 22 de la boucle de calcul 19, le calculateur 10 filtre, pour chaque voie de détection, le signal transformé $\lambda^*$ pour générer le signal filtré X. Plus précisément, au cours de l'étape de filtrage 22, le calculateur 10 met en œuvre le filtre de Kalman pour le signal transformé $\lambda^*$ associé à chaque voie de détection.

Pour chaque voie de détection, le modèle d'état sous-tendant le filtre Kalman mis en œuvre ci-après présente une équation d'état de la forme :

$$X_k=AX_{k-1}+W_k$$

où $X_k$ est la valeur prise, à l'instant de calcul k, par un vecteur d'état du filtre de Kalman ;

$X_{k-1}$ est la valeur prise, à l'instant de calcul précédent indexé par l'entier k-1, par le vecteur d'état ;

A est une matrice de transition d'état prédéterminée ;

$W_k$ est une réalisation, à l'instant k, d'un vecteur de bruit présentant une matrice de covariance de bruit B prédéterminée. Plus précisément, $W_k$ est le résultat du produit de la matrice de covariance B par une réalisation d'un vecteur aléatoire dont chaque composante est une variable aléatoire gaussienne centrée de variance unitaire.

La matrice de covariance de bruit B sera décrite ultérieurement.

Avantageusement, la matrice de transition d'état s'écrit :

$$A = \begin{bmatrix} 1 & a & b \\ 0 & 1 & c \\ 0 & 0 & 1 \end{bmatrix},$$

où a, b et c sont des réels prédéterminés.

Par exemple, les réels a, b et c sont respectivement égaux à 1, 0 et 1, la matrice de transition d'état s'écrivant :

$$A = \begin{bmatrix} 1 & 1 & 0 \\ 0 & 1 & 1 \\ 0 & 0 & 1 \end{bmatrix}.$$

Avantageusement, le vecteur d'état est un vecteur à trois composantes de la forme : $X_k = [\mu_k, v_k, b_k]^T$, où $X_k$ la valeur prise par le vecteur d'état à l'instant de calcul k ;

$\mu_k$ est l'espérance du signal transformé à l'instant k ;

$v_k$ est un accroissement de l'espérance $\mu_k$ à l'instant k ;

$b_k$ est un biais sur l'accroissement $v_k$ à l'instant k ; et

$^T$ est l'opérateur « transposée ».

A l'instant dé calcul k, le calculateur 10 reçoit un échantillon $\lambda^*_k$ du signal transformé. L'échantillon $\lambda^*_k$ est égal à la transformée, par la transformée stabilisatrice de variance h, d'un échantillon $\lambda_k$ du signal de flux neutronique $\lambda$ à l'instant de calcul k, c'est-à-dire :

$$\lambda^*_k = h(\lambda_k).$$

*Prédiction*

Puis, au cours d'une phase de prédiction 24 de l'étape de filtrage 22, le calculateur 10 calcule une valeur prédite $\hat{X}_{k|k-x}$ du vecteur d'état X pour l'instant de calcul k, selon :

$$\hat{X}_{k|k-1} = A\hat{X}_{k-1|k-1}$$

où $\hat{X}_{k-1|k-1}$ est une valeur estimée du vecteur d'état à l'instant de calcul précédent k-1. Le calcul de la valeur estimée du vecteur d'état sera décrit ultérieurement.

Puis le calculateur 10 calcule une erreur de prédiction $e_k$ selon :

$$e_k = \lambda^*_k - C^T\hat{X}_{k|k-1}$$

où $C^T$ est le vecteur ligne [1 0 0].

La première composante de la valeur prédite $\hat{X}_{k|k-1}$ du vecteur d'état X pour l'instant de calcul k est la valeur prédite du signal transformé $\lambda^*$ à l'instant k. Il en résulte que l'erreur de prédiction $e_k$ est égale à la différence entre la valeur effectivement prise par le signal transformé $\lambda^*$ à l'instant k et la valeur prédite du signal transformé pour l'instant k.

*Test*

Puis, au cours d'une phase de test 26 de l'étape de filtrage 22, le calculateur 10 met en œuvre un test sur au moins une grandeur de test dont la valeur dépend du signal transformé $\lambda^*$.

Par exemple, pour l'instant de calcul k, le calculateur 10 compare la valeur prise par une première grandeur de test $g_{1,k}$ à un seuil prédéterminé. En outre, pour ledit instant de calcul k, le calculateur 10 compare la valeur prise par une deuxième grandeur de test $g_{2,k}$ au seuil prédéterminé.

La première grandeur de test vaut: $g_{1,k} = \max (g_{1,k-1} + e_k - \theta ; 0)$, et la deuxième grandeur de test vaut : $g_{2,k} = \max (g_{2,k-1} - e_k - \theta ; 0)$,

où $g_{1,k-1}$ est la valeur prise par la première grandeur de test à l'instant précédent k-1 ;

$g_{2,k-1}$ est la valeur prise par la deuxième grandeur de test à l'instant précédent k-1 ;

max est l'opérateur « maximum » ; et

$\theta$ est un réel positif prédéterminé.

*Sélection*

Puis, au cours d'une phase de sélection 28 de l'étape de filtrage 22, le calculateur 10 modifie des paramètres du filtre de Kalman, dits « paramètres adaptables », en fonction de l'issue de la phase de test 26.

Dans ce cas, la matrice de covariance de bruit B du filtre de Kalman constitue le paramètre adaptable du filtre de Kalman. En particulier, le calculateur 10 sélectionne une matrice de covariance de bruit B pour le filtre de Kalman, parmi une pluralité de matrices de covariance de bruit distinctes. Chaque matrice de covariance B est une matrice symétrique définie positive.

Par exemple, si chacune parmi la première grandeur de test $g_{1,k}$ et la deuxième grandeur de test $g_{2,k}$ est inférieure ou égale au seuil prédéterminé, le calculateur 10 sélectionne, pour le filtre de Kalman, une première valeur de la matrice de covariance de bruit B. Sinon, le calculateur 10 sélectionne, pour le filtre de Kalman, une deuxième valeur de la matrice de covariance de bruit B, distincte de la première valeur de la matrice de covariance de bruit B.

Par exemple, si chacune parmi la première grandeur de test $g_{1,k}$ et la deuxième grandeur de test $g_{2,k}$ est inférieure ou égale au seuil prédéterminé, alors le calculateur 10 sélectionne une première matrice de covariance de bruit B de valeur :

$$B = \begin{bmatrix} 10^{-6} & 0 & 0 \\ 0 & 10^{-6} & 0 \\ 0 & 0 & 10^{-6} \end{bmatrix}.$$

Sinon, le calculateur 10 sélectionne une deuxième matrice de covariance de bruit B de valeur :

$$B = \begin{bmatrix} 10^{12} & m & n \\ m & 10^{12} & p \\ n & p & 10^{6} \end{bmatrix}$$

où m, n et p sont des réels du même ordre de grandeur que le dernier coefficient de la diagonale de la deuxième matrice de covariance de bruit B.

De préférence, le filtre de Kalman comporte un lisseur de Kalman à pas fixe. Un tel lisseur de Kalman à pas fixe est connu.

*Calcul*

Puis, au cours d'une phase de calcul 30 de l'étape de filtrage 22, le calculateur 10 calcule également une valeur prédite $P_{k|k-1}$ d'une covariance du vecteur d'état $\hat{X}_{k|k-1}$, selon :

$$P_{k|k-1} = AP_{k-1|k-1}A^T + BB^T$$

où $P_{k-1|k-1}$ est la valeur de la covariance du vecteur d'état $\hat{X}_{k-1|k-1}$ à l'instant de calcul précédent k-1.

Le calculateur 10 calcule, en outre, une covariance de l'erreur de prédiction, selon :

$$S_k = C^T P_{k|k-1} C + R$$

où R est la variance associée à la transformée stabilisatrice de variance h ; R est un scalaire.

Puis, le calculateur 10 calcule un gain de Kalman optimal selon :

$$K_k = P_{k|k-1} C S_k^{-1}$$

où $K_k$ est la valeur du gain de Kalman optimal à l'instant de calcul k.

Puis, le calculateur 10 calcule la valeur de la covariance $P_{k|k}$ du vecteur d'état $\hat{X}_{k|k}$ à l'instant de calcul k, selon :

$$P_{k|k} = P_{k|k-1} - K_k C^T P_{k|k-1}$$

Puis, le calculateur 10 calcule une valeur estimée $\hat{X}_{k|k}$ du vecteur d'état X, à l'instant de calcul k, selon :

$$\hat{X}_{k|k} = \hat{X}_{k-1|k-1} + K_k e_k$$

La valeur estimée $\hat{X}_{k|k}$ du vecteur d'état X, à l'instant de calcul k, constitue l'échantillon associé à l'instant de calcul k du signal filtré $\hat{X}$.

La valeur estimée $\hat{X}_{k|k}$ du vecteur d'état X, à l'instant de calcul k s'écrit également :

$$\hat{X}_{k|k} = \begin{bmatrix} \widehat{\mu_k}, & \widehat{v_k}, & \widehat{b_k} \end{bmatrix}^T$$

où $\widehat{\mu_k}$ est la valeur estimée de la valeur moyenne du signal transformé à l'instant k;

$\widehat{v_k}$ est la valeur estimée de l'accroissement de la valeur moyenne $\mu_k$ à l'instant k ; et

$\widehat{b_k}$ est la valeur estimée du biais sur l'accroissement $v_k$ à l'instant k.

Transformation inverse

Puis, au cours d'une étape de transformation inverse 32 de la boucle de calcul 19, pour chaque voie de détection, le calculateur 10 transforme le signal filtré $\hat{X}$ correspondant à ladite voie de détection par la transformée réciproque $h^{-1}$ de la transformée stabilisatrice de variance h mise en œuvre au cours de l'étape de transformation 20 de la même boucle de calcul 19. Une telle transformation inverse est effectuée à chaque instant de calcul k.

Plus précisément, le calculateur 10 calcule un vecteur dont chaque composante est égale à l'image de la composante correspondante du signal filtré X par la transformée réciproque. Le vecteur fourni par le calculateur 10 durant l'étape de transformation inverse 32 constitue le signal de flux neutronique filtré X*.

Pour la voie courant, la transformée réciproque s'écrit :

$$h^{-1}(x_i) = \frac{\alpha_C}{4} x_i^2 - \frac{\beta_C}{\alpha_C}$$

où $x_i$ est l'une quelconque des composantes du signal filtré $\hat{X}$.

En outre, pour la voie fluctuation K2, la transformée réciproque s'écrit :

$$h^{-1}(x_i) = \frac{\sqrt{\alpha_F \Delta_F} \sinh(x_i) - \beta_F}{2\alpha_F}$$

où sinh est la fonction sinus hyperbolique.

En outre, pour la voie fluctuation K3, la transformée réciproque s'écrit :

$$h^{-1}(x_i) = \frac{\sqrt{\beta_{K3} \Delta_{K3}} \, \sinh(x_i) - \gamma_{K3}}{2\beta_{K3}}$$

En outre, pour la voie impulsion, la transformée inverse est, en fonction de la transformée stabilisatrice de variance appliquée au cours de l'étape de transformation 20, la transformée inverse de la transformée d'Anscombe ou la transformée inverse de la transformée de Haar-Fisz.

Calcul du flux neutronique et/ou de la vitesse de variation du flux neutronique

Puis, au cours d'une étape d'estimation 34, le calculateur 10 calcule, pour chaque voie de détection, le flux neutronique $\varphi$ détecté par le détecteur 4 et/ou la vitesse de variation VV du flux neutronique détecté par le détecteur 4, à partir du signal de flux neutronique filtré X*.

Plus précisément, à l'instant de calcul k, le flux neutronique détecté par le détecteur 4 s'obtient par :

$$\varphi_k = \rho . h^{-1}(\widehat{\mu_k})$$

où $\varphi_k$ est la valeur calculée du flux neutronique à l'instant k ; et
$\rho$ est un coefficient d'étalonnage prédéterminé.

Le coefficient d'étalonnage $\rho$ dépend du système de contrôle-commande 2.

En outre, à l'instant de calcul k, la vitesse de variation du flux neutronique détecté par le détecteur 4 s'obtient, pour toutes les voies de détection à l'exception de la voie courant, par :

$$VV_k = \frac{60\left(h^{-1}(\widehat{v_k}) - h^{-1}(\widehat{b_k})\right)}{T_e \ln 2}$$

où $VV_k$ est la valeur calculée de la vitesse de variation du flux neutronique à l'instant k ;
$T_e$ est la période d'échantillonnage du signal de flux neutronique $\lambda$ ; et

ln est la fonction « logarithme népérien ».

Pour la voie courant, à l'instant de calcul k, la vitesse de variation du flux neutronique détecté par le détecteur 4 s'obtient par :

$$VV_k = \frac{60\left(\widehat{v_k} - \widehat{b_k}\right)}{(T_e \ln 2)\widehat{\mu_k}}$$

Choix d'un mode de fonctionnement

Puis, en fonction de la valeur calculée du flux neutronique $\varphi_k$, le calculateur 10 identifie, au cours d'une étape de choix 36, le mode de fonctionnement pour lequel la valeur calculée du flux neutronique $\varphi_k$ sur la voie de détection correspondante appartient à la plage de flux neutronique associée audit mode de fonctionnement.

Puis, pour le mode de fonctionnement identifié, le calculateur 10 sélectionne la valeur calculée du flux neutronique $\varphi_k$ correspondante comme étant la valeur réelle du flux neutronique vu par le détecteur 4.

En outre, pour le mode de fonctionnement identifié, le calculateur 10 sélectionne la valeur calculée de la vitesse de variation $VV_k$ correspondante comme étant la valeur réelle de la vitesse de variation vue par le détecteur 4.

Pour les valeurs calculées de flux neutronique associées simultanément à la voie fluctuation K3 et à une autre voie de détection, le calculateur 10 sélectionne préférentiellement la valeur associée au mode K3.

A l'issue de l'étape de choix 36, le calculateur 10 met en œuvre une nouvelle boucle de calcul 19 associée à un instant de calcul suivant indexé par l'entier k+1.

A titre d'exemple, au moment de la mise en route de la centrale nucléaire à surveiller, le flux neutronique généré par le cœur de la centrale nucléaire est à son niveau le plus bas, typiquement inférieur à $10^4$ neutrons.cm$^{-2}$.s$^{-1}$. Une telle valeur conduira à ce que le mode de fonctionnement choisi par le calculateur 10 sera le mode impulsion.

En variante, le filtre est un filtre fondé sur la méthode des moindres carrés, par exemple une régression linéaire.

Dans ce cas, l'étape de filtrage 22 de la boucle de calcul 19 diffère de ce qui a été précédemment décrit.

Plus précisément, au cours de la phase de prédiction 24, lors d'un instant de calcul k, le calculateur 10 sélectionne un nombre P prédéterminé d'échantillons, incluant l'échantillon $\lambda^*_k$ courant et P-1 échantillons précédents. Puis, le calculateur 10 optimise une fonction de régression prédéterminée sur les P échantillons sélectionnés.

Puis, durant la phase de test 26, le calculateur 10 met en œuvre un test d'adéquation sur les résidus, c'est-à-dire sur la différence entre la fonction de régression estimée obtenue à l'issue de l'optimisation et les échantillons. Par exemple, un tel test d'adéquation est le test du $\chi^2$.

Si, à l'issue de la phase de test 26, le résultat du test d'adéquation appartient à une première plage prédéterminée, alors, au cours de la phase de sélection 28, le calculateur 10 sélectionne un nombre plus faible d'échantillons. Puis, au cours de la phase de calcul 30, le calculateur 10 optimise de nouveau la fonction de régression, avec ledit nombre plus faible d'échantillons.

Sinon, le calculateur 10 conserve la fonction de régression initialement optimisée.

Dans ce cas, le nombre d'échantillons constitue le paramètre adaptable du filtre.

## Revendications

1. Procédé de traitement d'un signal de flux neutronique associé à une voie de détection, le signal de flux neutronique étant représentatif d'un flux neutronique détecté par un détecteur (4) de neutrons au cours du temps, le procédé comportant les étapes suivantes mises en œuvre par un calculateur (10):

   - la transformation (20) du signal de flux neutronique par une transformée stabilisatrice de variance, pour générer un signal transformé ;
   - la mise en œuvre d'un test (26) sur au moins une grandeur de test dont la valeur dépend du signal transformé ;
   - en fonction de l'issue du test (26), la sélection (28) d'une valeur d'au moins un paramètre adaptable d'un filtre prédéterminé parmi une pluralité de valeurs distinctes ;
   - le filtrage (30) du signal transformé par le filtre pour générer un signal filtré, chaque paramètre adaptable du filtre présentant la valeur sélectionnée ;
   - la transformation inverse (32) du signal filtré par une transformée réciproque de la transformée stabilisatrice de variance, pour générer un signal de flux neutronique filtré.

2. Procédé selon la revendication 1, dans lequel le filtre est un filtre de Kalman, le paramètre adaptable étant une matrice de covariance de bruit du modèle d'état sous-tendant le filtre de Kalman.

3. Procédé selon la revendication 2, dans lequel le modèle d'état présente une équation d'état de la forme :

$$X_k = AX_{k-1} + W_k$$

   où $X_k$ est la valeur prise, à un instant de calcul k, par un vecteur d'état du filtre de Kalman, le signal filtré dépendant d'au moins une composante du vecteur d'état ;
   $X_{k-1}$ est la valeur prise, à l'instant précédent k-1, par le vecteur d'état ;
   A est une matrice de transition d'état prédéterminée ;
   $W_k$ est une réalisation, à l'instant k, d'un vecteur de bruit présentant une matrice de covariance de bruit dont la valeur est la valeur sélectionnée au cours de la sélection (28).

4. Procédé selon la revendication 3, dans lequel le vecteur d'état est un vecteur à trois composantes de la forme : $X_k = [\mu_k, v_k, b_k]^T$,
   où $X_k$ la valeur prise par le vecteur d'état (X) à l'instant k ;
   $\mu_k$ est la valeur moyenne du signal transformé à l'instant k ;
   $v_k$ est un accroissement de l'espérance $\mu_k$ à l'instant k ;
   $b_k$ est un biais sur l'accroissement $v_k$ à l'instant k ; et
   $^T$ est l'opérateur « transposée »,
   et dans lequel la matrice de transition d'état s'écrit :

$$A = \begin{bmatrix} 1 & a & b \\ 0 & 1 & c \\ 0 & 0 & 1 \end{bmatrix},$$

   où a, b et c sont des réels prédéterminés.

5. Procédé selon l'une quelconque des revendications 1 à 4, dans lequel la mise en œuvre d'un test (26) comprend la comparaison, pour un instant de calcul indexé par un entier k, de la valeur prise par une première grandeur de test et une deuxième grandeur de test à un seuil prédéterminé, et la sélection d'une première matrice de covariance de bruit si la première grandeur de test et la deuxième grandeur de test sont chacune inférieure ou égale au seuil prédéterminé, et la sélection d'une deuxième matrice de covariance de bruit distincte de la première matrice de covariance de bruit sinon,
   la première grandeur de test valant: $g_{1,k} = \max (g_{1,k-1} + e_k - \theta ; 0)$, et la deuxième grandeur de test valant : $g_{2,k} = \max (g_{2,k-1} - e_k - \theta ; 0)$,
   où $g_{1,k-1}$ est la valeur prise par la première grandeur de test à l'instant précédent k-1 ;
   $g_{2,k-1}$ est la valeur prise par la deuxième grandeur de test à l'instant précédent k-1 ;
   max est l'opérateur « maximum » ;
   $\theta$ est un réel positif prédéterminé ; et
   $e_k$ est une erreur de prédiction égale à la différence entre une valeur prédite du signal transformé pour l'instant k, générée au cours de l'étape de filtrage, et la valeur prise par le signal transformé à l'instant k.

6. Procédé selon l'une quelconque des revendications 1 à 5, dans lequel, pour une voie de détection associée à un mode dit courant, la transformée stabilisatrice de variance s'écrit :

$$h(\lambda) = \frac{2}{\alpha_C} \sqrt{\alpha_C \lambda + \beta_C}$$

   où h est la transformée stabilisatrice de variance ;
   $\lambda$ est le signal de flux neutronique ; et
   $\alpha_C$ et $\beta_C$ sont des réels strictement positifs prédéterminés ;
la transformée réciproque s'écrivant :

$$h^{-1}(x_i) = \frac{\alpha_C}{4} x_i^2 - \frac{\beta_C}{\alpha_C}$$

où $h^{-1}$ est la transformée réciproque de la transformée stabilisatrice de variance ; et
$x_i$ est une composante du signal filtré.

7. Procédé selon l'une quelconque des revendications 1 à 6, dans lequel, pour une voie de détection associée à un mode dit fluctuation K2, la transformée stabilisatrice de variance s'écrit :

$$h(\lambda) = \frac{1}{\sqrt{\alpha_F}} \text{asinh}\left(\frac{2\alpha_F \lambda + \gamma_F}{\sqrt{\Delta_F}}\right)$$

où h est la transformée stabilisatrice de variance ;
$\lambda$ est le signal de flux neutronique ;
$\Delta_F$ est un réel défini $\Delta = 4\gamma_F \alpha_F - \beta_F^2$ ;
$\alpha_F$, $\beta_F$ et $\gamma_F$ sont des réels strictement positifs prédéterminés ; et asinh est la fonction arcsinus hyperbolique ;
la transformée réciproque s'écrivant :

$$h^{-1}(x_i) = \frac{\sqrt{\alpha_F \Delta_F} \, \sinh(x_i) - \beta_F}{2\alpha_F}$$

où $h^{-1}$ est la transformée réciproque de la transformée stabilisatrice de variance ;
$x_i$ est une composante du signal filtré ; et
sinh est la fonction sinus hyperbolique.

8. Procédé selon l'une quelconque des revendications 1 à 7, dans lequel, pour une voie de détection associée à un mode dit fluctuation K3, la transformée stabilisatrice de variance s'écrit :

$$h(\lambda) = \frac{1}{\sqrt{\beta_{K3}}} \text{asinh}\left(\frac{2\beta_{K3} \lambda + \delta_{K3}}{\sqrt{\Delta_{K3}}}\right)$$

où h est la transformée stabilisatrice de variance ;
$\lambda$ est le signal de flux neutronique ;
$\Delta_{K3}$ est un réel défini par $\Delta_{K3} = 4\delta_{K3}\beta_{K3} - \gamma_{K3}^2$ ;
$\beta_{k3}$, $\gamma_{k3}$ et $\delta_{K3}$ sont des réels strictement positifs prédéterminés ; et asinh est la fonction arcsinus hyperbolique ;

la transformée réciproque s'écrivant :

$$h^{-1}(x_i) = \frac{\sqrt{\beta_{K3} \Delta_{K3}} \, \sinh(x_i) - \gamma_{K3}}{2\beta_{K3}}$$

où $h^{-1}$ est la transformée réciproque de la transformée stabilisatrice de variance ;
$x_i$ est une composante du signal filtré ; et
sinh est la fonction sinus hyperbolique,
et, de préférence, dans lequel, pour la voie de détection associée au mode fluctuation K3, le signal de flux neutronique est le cumulant d'ordre 3 d'un signal d'entrée proportionnel à un signal de détection généré par le détecteur (4).

9. Procédé selon la revendication 3 ou l'une quelconque des revendications 4 à 8 lorsqu'elle dépend de la revendication 3, dans lequel une estimée du vecteur d'état obtenue en sortie du filtre de Kalman constitue le signal filtré, et dans lequel le vecteur obtenu en appliquant la transformée réciproque à chaque composante du signal filtré constitue le signal de flux neutronique filtré,
le procédé comportant le calcul du flux neutronique détecté par le détecteur (4) selon :

$$\varphi_k = \rho . h^{-1}(\widehat{\mu_k})$$

où $\varphi_k$ est la valeur du flux neutronique à l'instant k ;
$\rho$ est un coefficient d'étalonnage prédéterminé ;
$h^{-1}$ est la transformée réciproque de la transformée stabilisatrice de variance ; et
$\widehat{\mu_k}$ est la première composante du signal filtré à l'instant k.

10. Procédé selon la revendication 9, comportant, pour chaque voie de détection, la comparaison de la valeur calculée du flux neutronique à une plage de flux neutronique prédéterminée associée à ladite voie de détection,
la valeur du flux neutronique étant prise comme étant, parmi l'ensemble des valeurs calculées de flux neutroniques, la valeur calculée du flux neutronique qui appartient à la plage de flux neutronique prédéterminée associée à la voie de détection correspondante.

11. Procédé selon la revendication 3 ou l'une quelconque des revendications 4 à 10 lorsqu'elle dépend de la revendication 3, dans lequel une estimée du vecteur d'état obtenue en sortie du filtre de Kalman constitue le signal filtré, le vecteur obtenu en appliquant la transformée réciproque à chaque composante du signal filtré constituant le signal de flux neutronique filtré,

le procédé comportant le calcul d'une vitesse de variation du flux neutronique détecté par le détecteur (4), pour une voie de détection non associée à un mode dit courant, selon :

$$VV_k = \frac{60\left(h^{-1}(\widehat{v_k})-h^{-1}\left(\widehat{b_k}\right)\right)}{T_e \ln 2}$$

où $VV_k$ est la valeur de la vitesse de variation du flux neutronique à l'instant k ;

$\rho$ est un coefficient d'étalonnage prédéterminé ;

$h^{-1}$ est la transformée réciproque de la transformée stabilisatrice de variance ;

$\widehat{v_k}$ est la deuxième composante du signal filtré à l'instant k ;

$\widehat{b_k}$ est la troisième composante du signal filtré à l'instant k ;

$T_e$ est la période d'échantillonnage du signal de flux neutronique ; et

ln est la fonction « logarithme népérien ».

12. Procédé selon la revendication 3 ou l'une quelconque des revendications 4 à 11 lorsqu'elle dépend de la revendication 3, dans lequel une estimée du vecteur d'état obtenue en sortie du filtre de Kalman constitue le signal filtré, le vecteur obtenu en appliquant la transformée réciproque à chaque composante du signal filtré constituant le signal de flux neutronique filtré,

le procédé comportant le calcul d'une vitesse de variation du flux neutronique détecté par le détecteur (4), pour une voie de détection associée à un mode dit courant, selon :

$$VV_k = \frac{60\left(\widehat{v_k}-\widehat{b_k}\right)}{(T_e \ln 2)\widehat{\mu_k}}$$

où $VV_k$ est la valeur de la vitesse de variation du flux neutronique à l'instant k ;

$\rho$ est un coefficient d'étalonnage prédéterminé ;

$h^{-1}$ est la transformée réciproque de la transformée stabilisatrice de variance ;

$\widehat{\mu_k}$ est la première composante du signal filtré à l'instant k ;

$\widehat{v_k}$ est la deuxième composante du signal filtré à l'instant k ;

$\widehat{b_k}$ est la troisième composante du signal filtré à l'instant k ;

$T_e$ est la période d'échantillonnage du signal de flux neutronique ; et

ln est la fonction « logarithme népérien ».

13. Produit programme d'ordinateur comportant des instructions de code de programme qui, lorsqu'elles sont exécutées par un ordinateur, mettent en œuvre le procédé selon l'une quelconque des revendications 1 à 12.

14. Dispositif (6) de traitement d'au moins un signal de flux neutronique associé à une voie de détection, le signal de flux neutronique étant issu d'un détecteur (4) de neutrons et étant représentatif d'un flux neutronique détecté par le détecteur (4) au cours du temps, le dispositif de traitement (6) étant **caractérisé en ce qu'**il comporte un calculateur (10) configuré, pour chaque voie de détection, pour :

- appliquer une transformée stabilisatrice de variance au signal de flux neutronique, pour générer un signal transformé ;
- mettre en œuvre un test sur au moins une grandeur de test dont la valeur dépend du signal transformé ;
- sélectionner, en fonction de l'issue du test, une valeur d'au moins un paramètre adaptable d'un filtre prédéterminé parmi une pluralité de valeurs distinctes ;
- mettre en œuvre le filtre sur le signal transformé pour générer un signal filtré, chaque paramètre adaptable du filtre présentant la valeur sélectionnée ;
- appliquer une transformée réciproque de la transformée stabilisatrice de variance au signal filtré, pour générer un signal de flux neutronique filtré ; et
- calculer le flux neutronique détecté par le détecteur et/ou la vitesse de variation du flux neutronique détecté par le détecteur à partir du signal de flux neutronique filtré.

15. Système de contrôle-commande (2) pour réacteur nucléaire comportant au moins un détecteur (4) de neutrons configuré pour détecter un flux neutronique et pour délivrer un signal de flux neutronique représentatif du flux neutronique détecté, et un dispositif de traitement (6) selon la revendication 14 pour calculer le flux neutronique détecté par le détecteur (4) et/ou la vitesse de variation du flux neutronique détecté par le détecteur (4) à partir du signal de flux neutronique.

**Patentansprüche**

1. Verfahren zum Verarbeiten eines Neutronenflusssignals, das einem Detektionskanal zugeordnet ist, wobei das Neutronenflusssignal repräsentativ ist für einen von einem Neutronendetektor (4) im Laufe der Zeit detektierten Neutronenfluss, wobei das Verfahren umfasst:

  - Transformieren (20) des Neutronenflusssignals durch eine varianzstabilisierende Transformation, um ein transformiertes Signal zu erzeugen;

  - Durchführen eines Tests (26) an mindestens einer Testgröße, deren Wert von dem transformierten Signal abhängt;

  - in Abhängigkeit vom Ergebnis des Tests (26), Auswählen (28) eines Wertes von mindestens einem anpassbaren Parameter eines vorbestimmten Filters aus einer Vielzahl von unterschiedlichen Werten;

  - Filtern (30) des durch das Filter transformierten Signals, um ein gefiltertes Signal zu erzeugen, wobei jeder anpassbare Parameter des Filters den ausgewählten Wert aufweist;

  - Inverses Transformieren (32) des gefilterten Signals durch eine reziproke Transformation der varianzstabilisierenden Transformation, um ein gefiltertes Neutronenflusssignal zu erzeugen.

2. Verfahren nach Anspruch 1, wobei das Filter ein Kalman-Filter ist und der anpassbare Parameter eine Rauschkovarianzmatrix des dem Kalman-Filter zugrunde liegenden Zustandsmodells ist.

3. Verfahren nach Anspruch 2, wobei das Zustandsmodell eine Zustandsgleichung der nachstehenden Formel aufweist:

$$X_k = AX_{k-1} + W_k$$

worin $X_k$ der zu einem Berechnungszeitpunkt k von einem Zustandsvektor des Kalman-Filters angenommene Wert ist, wobei das gefilterte Signal von mindestens einer Komponente des Zustandsvektors abhängt;

$X_{k-1}$ der Wert ist, den der Zustandsvektor zum vorhergehenden Zeitpunkt k-1 angenommen hat;

A eine vorgegebene Zustandsübergangsmatrix ist;

$VV_k$ eine Ausführung eines Rauschvektors zum Zeitpunkt k ist, welcher Vektor eine Rauschkovarianzmatrix aufweist, deren Wert der bei der Auswahl (28) ausgewählte Wert ist.

4. Verfahren nach Anspruch 3, wobei der Zustandsvektor ein Drei-Komponenten-Vektor der nachstehenden Formel ist:

$$X_k = [\mu_k,\ v_k,\ b_k]^T$$

ist,

worin $X_k$ der Wert ist, den der Zustandsvektor (X) zum Zeitpunkt k annimmt; $\mu_k$ der Mittelwert des transformierten Signals zum Zeitpunkt k ist; $v_k$ ein Anstieg des Erwartungswerts $\mu_k$ zum Zeitpunkt k ist;

$b_k$ eine Verzerrung über den Anstieg $v_k$ zum Zeitpunkt k ist; und

$^T$ der Operator "transponierte Matrix" ist,

und wobei die Zustandsübergangsmatrix lautet:

$$A = \begin{bmatrix} 1 & a & b \\ 0 & 1 & c \\ 0 & 0 & 1 \end{bmatrix}$$

worin a, b und c vorbestimmte reelle Zahlen sind.

5. Verfahren nach einem der Ansprüche 1 bis 4, wobei die Durchführung eines Tests (26) das Vergleichen des von einer ersten Testgröße und einer zweiten Testgröße angenommenen Wertes mit einem vorbestimmten Schwellenwert für eine mit einer ganzen Zahl k indexierte Berechnungszeit und das Auswählen einer ersten Rauschkovarianzmatrix umfasst, wenn die erste Testgröße und die zweite Testgröße jeweils kleiner oder gleich dem vorbestimmten Schwellenwert sind, und andernfalls das Auswählen einer zweiten Rauschkovarianzmatrix umfasst, die sich von der ersten Rauschkovarianzmatrix unterscheidet,

wobei für die erste Testgröße gilt: $g_{1,k} = \max (g_{1,k-1} + e_k - \theta; 0)$, und für die zweite Testgröße gilt: $g_{2,k} = \max (g_{2,k-1} - e_k - \theta; 0)$,

worin $g_{1,k-1}$ der Wert ist, den die erste Testgröße zum vorhergehenden Zeitpunkt k-1 angenommen hat;

$g_{2,k-1}$ der Wert ist, den die zweite Testgröße zum vorhergehenden Zeitpunkt k-1 angenommen hat;

max der Operator "Maximum" ist;

$\theta$ eine vorbestimmte, positive reelle Zahl ist; und

$e_k$ ein Vorhersagefehler ist, der gleich der Differenz zwischen einem vorhergesagten Wert des transformierten Signals zum Zeitpunkt k, der während des Filterungsschritts erzeugt wird, und dem Wert ist, den das transformierte Signal zum Zeitpunkt k annimmt.

6. Verfahren nach einem der Ansprüche 1 bis 5, wobei für einen Detektionskanal, der einem sogenannten Strommodus zugeordnet ist, die varianzstabilisierende Transformation lautet:

$$h(\lambda) = \frac{2}{a_c} \sqrt{a_c \lambda + \beta_c}$$

worin h die varianzstabilisierende Transformation ist;

λ das Neutronenflusssignal ist; und

$\alpha_c$ und $\beta_c$ vorbestimmte, streng positiv reelle Zahlen sind; wobei die reziproke Transformation lautet:

$$h^{-1}(x_i) = \frac{\alpha_c}{4} x_i^2 - \frac{\beta_c}{\alpha_c}$$

worin $h^{-1}$ die reziproke Transformation der varianzstabilisierenden Transformation ist; und

$x_i$ eine Komponente des gefilterten Signals ist.

7. Verfahren nach einem der Ansprüche 1 bis 6, wobei für einen Detektionskanal, der einem sogenannten Fluktuationsmodus K2 zugeordnet ist, die varianzstabilisierende Transformation lautet:

$$h(\lambda) = \frac{1}{\sqrt{\alpha_F}} \operatorname{asinh}\left(\frac{2\alpha_F\lambda+\gamma_F}{\sqrt{\Delta_F}}\right)$$

worin h die varianzstabilisierende Transformation ist;

λ das Neutronenflusssignal ist;

$\Delta_F$ eine reelle Zahl ist, die durch

$$\Delta = 4\gamma_F\alpha_F - \beta_F^2$$ definiert ist;

$\alpha_F$, $\beta_F$ und $\gamma_F$ vorbestimmte, streng positive reelle Zahlen sind; und asinh die hyperbolische Arcsinusfunktion ist;

wobei die reziproke Transformation lautet:

$$h^{-1}(x_i) = \frac{\sqrt{\alpha_F\Delta_F}\sinh(x_i)-\beta_F}{2\alpha_F}$$

worin $h^{-1}$ die reziproke Transformation der varianzstabilisierenden Transformation ist;

$x_i$ eine Komponente des gefilterten Signals ist; und

sinh die hyperbolische Sinusfunktion ist.

8. Verfahren nach einem der Ansprüche 1 bis 7, wobei für einen Detektionskanal, der einem sogenannten Fluktuationsmodus K3 zugeordnet ist, die varianzstabilisierende Transformation lautet:

$$h(\lambda) = \frac{1}{\sqrt{\beta_{K3}}} \operatorname{asinh}\left(\frac{2\beta_{K3}\lambda+\delta_{K3}}{\sqrt{\Delta_{K3}}}\right)$$

worin h die varianzstabilisierende Transformation ist;

λ das Neutronenflusssignal ist;

$\Delta_{K3}$ eine reelle Zahl ist, die durch

$$\Delta_{K3} = 4\delta_{K3}\beta_{K3} - \gamma_{K3}^2$$ definiert ist; $\beta_{K3}$, $\gamma_{K3}$ und $\delta_{K3}$ vorbestimmte, streng positive reelle Zahlen sind; und asinh die hyperbolische Arcsinusfunktion ist;

wobei die reziproke Transformation lautet:

$$h^{-1}(x_i) = \frac{\sqrt{\beta_{K3}\Delta_{K3}}\sinh(x_i)-\gamma_{K3}}{2\beta_{K3}}$$

worin $h^{-1}$ die reziproke Transformation der varianzstabilisierenden Transformation ist;

$x_i$ eine Komponente des gefilterten Signals ist; und

sinh die hyperbolische Sinusfunktion ist,

und wobei vorzugsweise für den dem Fluktuationsmodus K3 zugeordneten Detektionskanal das Neutronenflusssignal die Kumulante dritter Ordnung eines Eingangssignals ist, das proportional zu einem vom Detektor (4) erzeugten Detektionssignal ist.

9. Verfahren nach Anspruch 3 oder einem der Ansprüche 4 bis 8 in Abhängigkeit von Anspruch 3, wobei ein am Ausgang des Kalman-Filters erhaltener Schätzwert des Zustandsvektors das gefilterte Signal bildet und wobei der durch Anwendung der reziproken Transformation auf jede Komponente des gefilterten Signals erhaltene Vektor das gefilterte Neutronenflusssignal bildet,

wobei das Verfahren die Berechnung des vom Detektor (4) detektierten Neutronenflusses umfasst gemäß:

$$\varphi_k = \rho.h^{-1}(\widehat{\mu_k})$$

worin $\varphi_k$ der Wert des Neutronenflusses zum Zeitpunkt k ist;

ρ ein vorbestimmter Kalibrierungskoeffizient ist;

$h^{-1}$ die reziproke Transformation der varianzstabilisierenden Transformation ist; und

$\widehat{\mu_k}$ die erste Komponente des gefilterten Signals zum Zeitpunkt k ist.

10. Verfahren nach Anspruch 9, umfassend für jeden Detektionskanal das Vergleichen des berechneten Wertes des Neutronenflusses mit einem vorbestimmten Neutronenflussbereich, der dem Detektionskanal zugeordnet ist,

wobei aus der Menge der berechneten Neutronenflusswerte der Wert des Neutronenflusses als der berechnete Wert des Neutronenflusses angenommen wird, der zu dem dem entsprechenden Detektionskanal zugeordneten vorbestimmten Neutronenflussbereich gehört.

11. Verfahren nach Anspruch 3 oder einem der Ansprüche 4 bis 10 in Abhängigkeit von Anspruch 3, wobei ein am Ausgang des Kalman-Filters erhaltener Schätzwert des Zustandsvektors das gefilterte Signal bildet, wobei der durch Anwendung der reziproken Transformation auf jede Komponente des gefilterten Signals erhaltene Vektor das gefilterte Neutronenflusssignal bildet,

wobei das Verfahren das Berechnen einer Änderungsrate des vom Detektor (4) detektierten Neutronenflusses für einen Detektionskanal, der nicht einem sogenannten Strommodus zugeordnet ist, umfasst, gemäß:

$$VV_k = \frac{60\left(h^{-1}(\widehat{v_k}) - h^{-1}(\widehat{b_k})\right)}{T_e ln2}$$

worin $VV_k$ der Wert der Änderungsrate des Neutronenflusses zum Zeitpunkt k ist;

ρ ein vorbestimmter Kalibrierungskoeffizient ist;

$h^{-1}$ die reziproke Transformation der varianzstabilisierenden Transformation ist;

$\widehat{v_k}$ die zweite Komponente des gefilterten Signals zum Zeitpunkt k ist;

$\widehat{b_k}$ die dritte Komponente des gefilterten Signals zum Zeitpunkt k ist;

$T_e$ die Abtastperiode des Neutronenflusssignals ist; und

ln die Funktion "Natürlicher Logarithmus" ist.

12. Verfahren nach Anspruch 3 oder einem der Ansprüche 4 bis 11 in Abhängigkeit von Anspruch 3, wobei ein am Ausgang des Kalman-Filters erhaltener Schätzwert des Zustandsvektors das gefilterte Signal bildet, wobei der durch Anwendung der reziproken Transformation auf jede Komponente des gefilterten Signals erhaltene Vektor das gefilterte Neutronenflusssignal bildet,

wobei das Verfahren das Berechnen einer Änderungsrate des vom Detektor (4) detektierten Neutronenflusses für einen Detektionskanal umfasst, der einem sogenannten Strommodus zugeordnet ist, gemäß:

$$VV_k = \frac{60\left(\widehat{v_k} - \widehat{b_k}\right)}{(T_e ln2)\widehat{\mu_k}}$$

worin $VV_k$ der Wert der Änderungsrate des Neutronenflusses zum Zeitpunkt k ist;

ρ ein vorbestimmter Kalibrierungskoeffizient ist;

$h^{-1}$ die reziproke Transformation der varianzstabilisierenden Transformation ist;

$\widehat{\mu_k}$ die erste Komponente des gefilterten Signals zum Zeitpunkt k ist;

$\widehat{v_k}$ die zweite Komponente des gefilterten Signals zum Zeitpunkt k ist;

$\widehat{b_k}$ die dritte Komponente des gefilterten Signals zum Zeitpunkt k ist;

$T_e$ die Abtastperiode des Neutronenflusssignals ist; und

ln die Funktion "Natürlicher Logarithmus" ist.

13. Computerprogrammprodukt mit Programmcodeanweisungen, die bei Ausführung durch einen Computer das Verfahren nach einem der Ansprüche 1 bis 12 durchführen.

14. Vorrichtung (6) zur Verarbeitung mindestens eines Neutronenflusssignals, das einem Detektionskanal zugeordnet ist, wobei das Neutronenflusssignal von einem Neutronendetektor (4) stammt und repräsentativ ist für einen von dem Detektor (4) im Laufe der Zeit detektierten Neutronenfluss, wobei die Verarbeitungsvorrichtung (6) **dadurch gekennzeichnet ist, dass** sie einen Rechner (10) enthält, der für jeden Detektionskanal ausgelegt ist zum:

- Anwenden einer varianzstabilisierenden Transformation auf das Neutronenflusssignal, um ein transformiertes Signal zu erzeugen;
- Durchführen eines Tests an mindestens einer Testgröße, deren Wert vom transformierten Signal abhängt;
- Auswählen, in Abhängigkeit vom Ergebnis des Tests, eines Wertes von mindestens einem anpassbaren Parameter eines vorbestimmten Filters aus einer Vielzahl von unterschiedlichen Werten;
- Implementieren des Filters auf das transformierte Signal, um ein gefiltertes Signal zu erzeugen, wobei jeder anpassbare Parameter des Filters den ausgewählten Wert aufweist;
- Anwenden einer reziproken Transformation der varianzstabilisierenden Transformation auf das gefilterte Signal, um ein gefiltertes Neutronenflusssignal zu erzeugen; und
- Berechnen des vom Detektor detektierten Neutronenflusses und/oder der Änderungsrate des vom Detektor detektierten Neutronenflusses anhand des gefilterten Neutronenflusssignals.

15. Prozessleitsystem (2) für Kernreaktoren, enthaltend mindestens einen Neutronendetektor (4), der dazu ausgelegt ist, einen Neutronenfluss zu detektieren und ein Neutronenflusssignal bereitzustellen, das für den detektierten Neutronenfluss repräsentativ ist, und eine Verarbeitungsvorrichtung (6) nach Anspruch 14 zum Berechnen des vom Detektor (4) detektierten Neutronenflusses und/oder der Änderungsrate des vom Detektor (4) detektierten Neutronenflusses anhand des Neutronenflusssignals.

## Claims

1. A method for processing a neutron flux signal associated with a detection path, the neutron flux signal being representative of a neutron flux detected by a neutron detector (4) over time, the method including the following steps implemented by a calculator (10):

   - transforming (20) the neutron flux signal by a variance stabilising transform, to generate a transformed signal;
   - implementing a test (26) on at least one test quantity, the value of which depends on the transformed signal;
   - depending on the outcome of the test (26), selecting (28) a value of at least one adaptable parameter of a predetermined filter from a plurality of distinct values;
   - filtering (30) the signal transformed by the filter to generate a filtered signal, each adaptable parameter of the filter having the selected value;
   - inversely transforming (32) the filtered signal by a reciprocal transform of the variance stabilising transform, to generate a filtered neutron flux signal.

2. The method according to claim 1, wherein the filter is a Kalman filter, the adaptable parameter being a noise covariance matrix of the state model underlying the Kalman filter.

3. The method according to claim 2, wherein the state model has a state equation of the form:

$$X_k = AX_{k-1} + W_k$$

   where $X_k$ is the value taken, at an instant of calculation k, by a state vector of the Kalman filter, the filtered signal depending on at least one component of the state vector;
   $X_{k-1}$ is the value taken, at the previous instant k-1, by the state vector;
   A is a predetermined state transition matrix;
   $W_k$ is a production, at instant k, of a noise vector having a noise covariance matrix the value of which is the value selected during the selection (28).

4. The method according to claim 3, wherein the state vector is a three-component vector of the form: $X_k =$
$[\mu_k, v_k, b_k]^T$,
   where $X_k$ is the value taken by the state vector (X) at instant k;
   $\mu_k$ is the mean value of the transformed signal at instant k;
   $v_k$ is an increase in expectation $\mu_k$ at instant k;
   $b_k$ is a bias on the increase $v_k$ at instant k; and
   $^T$ is the "transposed" operator,
   and wherein the state transition matrix is written:

$$A = \begin{bmatrix} 1 & a & b \\ 0 & 1 & c \\ 0 & 0 & 1 \end{bmatrix},$$

   where a, b and c are predetermined real numbers.

5. The method according to any one of claims 1 to 4, wherein the implementation of a test (26) comprises the comparison, for a calculation instant indexed by an integer k, of the value taken by a first test quantity and a second test quantity at a predetermined threshold, and the selection of a first noise covariance matrix if the first test quantity and the second test quantity are each less than or equal to the predetermined threshold, and the selection of a second noise covariance matrix distinct from the first noise covariance matrix otherwise,
   the first test quantity being: $g_{1,k} = \max (g_{1,k-1} + e_k - \theta; 0)$, and the second test quantity being: $g_{2,k} = \max (g_{2,k-1} + e_k - \theta; 0)$,
   where $g_{1,k-1}$ is the value taken by the first test quantity at the previous instant k-1;
   $g_{2,k-1}$ is the value taken by the second test quantity at the previous instant k-1;
   max is the "maximum" operator;
   $\theta$ is a predetermined positive real number; and
   $e_k$ is a prediction error equal to the difference between a predicted value of the transformed signal for the instant k, generated during the filtering step, and the value taken by the transformed signal at the instant k.

6. The method according to any one of claims 1 to 5, wherein, for a detection path associated with a mode called current mode, the variance stabilising transform is written:

$$h(\lambda) = \frac{2}{\alpha_C} \sqrt{\alpha_C \lambda + \beta_C}$$

   where h is the variance stabilising transform;
   $\lambda$ is the neutron flux signal; and
   $\alpha_C$ and $\beta_C$ are strictly positive predetermined real numbers; the reciprocal transform is written:

$$h^{-1}(x_i) = \frac{\alpha_C}{4}x_i^2 - \frac{\beta_C}{\alpha_C}$$

where $h^{-1}$ is the reciprocal transform of the variance stabilising transform; and
$x_i$ is a component of the filtered signal.

7. The method according to any one of claims 1 to 6, wherein, for a detection path associated with a mode called fluctuation mode K2, the variance stabilising transform is written:

$$h(\lambda) = \frac{1}{\sqrt{\alpha_F}} asinh\left(\frac{2\alpha_F\lambda + \gamma_F}{\sqrt{\Delta_F}}\right)$$

where $h$ is the variance stabilising transform;
$\lambda$ is the neutron flux signal;
$\Delta_F$ is a real number defined by $\Delta = 4\gamma_F\alpha_F - \beta_F^2$;
$\alpha_F$, $\beta_F$ and $\gamma_F$ are predetermined strictly positive real numbers; and asinh is the hyperbolic arcsine function;
the reciprocal transform is written:

$$h^{-1}(x_i) = \frac{\sqrt{\alpha_F\Delta_F}\ sinh(x_i) - \beta_F}{2\alpha_F}$$

where $h^{-1}$ is the reciprocal transform of the variance stabilising transform;
$x_i$ is a component of the filtered signal; and
sinh is the hyperbolic sine function.

8. The method according to any one of claims 1 to 7, wherein, for a detection path associated with a mode called fluctuation mode K3, the variance stabilising transform is written:

$$h(\lambda) = \frac{1}{\sqrt{\beta_{K3}}} asinh\left(\frac{2\beta_{K3}\lambda + \delta_{K3}}{\sqrt{\Delta_{K3}}}\right)$$

where $h$ is the variance stabilising transform;
$\lambda$ is the neutron flux signal;
$\Delta_{k3}$ is a real number defined by
$$\Delta_{K3} = 4\delta_{K3}\beta_{K3} - \gamma_{K3}^2\ ;$$
$\beta_{k3}$, $\gamma_{K3}$ and $\delta_{K3}$ are predetermined strictly positive real numbers; and asinh is the hyperbolic arcsine function;
the reciprocal transform is written:

$$h^{-1}(x_i) = \frac{\sqrt{\beta_{K3}\Delta_{K3}}\ sinh(x_i) - \gamma_{K3}}{2\beta_{K3}}$$

where $h^{-1}$ is the reciprocal transform of the variance stabilising transform;
$x_i$ is a component of the filtered signal; and
sinh is the hyperbolic sine function,
and, preferably, wherein, for the detection path associated with the fluctuation mode K3, the neutron flux signal is the cumulative of order 3 of an input signal proportional to a detection signal generated by the detector (4).

9. The method according to claim 3 or any one of claims 4 to 8 when it depends on claim 3, wherein an estimate of the state vector obtained at the output of the Kalman filter constitutes the filtered signal, and wherein the vector obtained by applying the reciprocal transform to each component of the filtered signal constitutes the filtered neutron flux signal,
the method including the calculation of the neutron flux detected by the detector (4) according to:

$$\varphi_k = \rho.h^{-1}(\widehat{\mu_k})$$

where $\varphi_k$ is the value of the neutron flux at instant k;
$\rho$ is a predetermined calibration coefficient;
$h^{-1}$ is the reciprocal transform of the variance stabilising transform; and
$\widehat{\mu_k}$ is the first component of the filtered signal at instant k.

10. The method according to claim 9, including, for each detection path, the comparison of the calculated value of the neutron flux with a predetermined neutron flux range associated with said detection path,
the value of the neutron flux being taken as, among all the calculated values of neutron fluxes, the calculated value of the neutron flux which belongs to the predetermined neutron flux range associated with the corresponding detection path.

11. The method according to claim 3 or any one of claims 4 to 10 when it depends on claim 3, wherein an estimate of the state vector obtained at the output of the Kalman filter constitutes the filtered signal, the vector obtained by applying the reciprocal transform to each component of the filtered signal constituting the filtered neutron flux signal,
the method including the calculation of a rate of the variation of the neutron flux detected by the detector (4), for a detection path not associated with a mode called current mode, according to:

$$VV_k = \frac{60\left(h^{-1}(\widehat{v_k}) - h^{-1}(\widehat{b_k})\right)}{T_e \ln 2}$$

where $VV_k$ is the value of the rate of the neutron flux variation at instant k;

$\rho$ is a predetermined calibration coefficient;

$h^{-1}$ is the reciprocal transform of the variance stabilising transform;

$\widehat{V}_k$ is the second component of the filtered signal at instant k;

$\widehat{b}_k$ is the third component of the filtered signal at instant k;

$T_e$ is the sampling period of the neutron flux signal; and

Ln is the "natural logarithm" function.

12. The method according to claim 3 or any one of claims 4 to 11 when it depends on claim 3, wherein an estimate of the state vector obtained at the output of the Kalman filter constitutes the filtered signal, the vector obtained by applying the reciprocal transform to each component of the filtered signal constituting the filtered neutron flux signal,

the method comprising the calculation of a rate of the variation of the neutron flux detected by the detector (4), for a detection path associated with a mode called current mode, according to:

$$VV_k = \frac{60\left(\widehat{v_k} - \widehat{b_k}\right)}{(T_e \ln 2)\widehat{\mu_k}}$$

where $VV_k$ is the value of the rate of the neutron flux variation at instant k;

$\rho$ is a predetermined calibration coefficient;

$h^{-1}$ is the reciprocal transform of the variance stabilising transform;

$\widehat{\mu_k}$ is the first component of the filtered signal at instant k;

$\widehat{V}_k$ is the second component of the filtered signal at instant k;

$\widehat{b}_k$ is the third component of the filtered signal at instant k;

$T_e$ is the sampling period of the neutron flux signal; and

Ln is the "natural logarithm" function.

13. A computer program product including program code instructions which, when executed by a computer, implement the method according to any one of claims 1 to 12.

14. A device (6) for processing at least one neutron flux signal associated with a detection path, the neutron flux signal coming from a neutron detector (4) and being representative of a neutron flux detected by the detector (4) over time, the processing device (6) being **characterised in that** it includes a computer (10) configured, for each detection path, for:

- applying a variance stabilising transform to the neutron flux signal, to generate a transformed signal;
- implementing a test on at least one test quantity the value of which depends on the transformed signal;
- selecting, depending on the outcome of the test, a value of at least one adaptable parameter of a predetermined filter from a plurality of distinct values;
- implementing the filter on the transformed signal to generate a filtered signal, each adaptable parameter of the filter representing the selected value;
- applying a reciprocal transform of the variance stabilising transform to the filtered signal, to generate a filtered neutron flux signal; and
- calculating the neutron flux detected by the detector and/or the rate of the variation of the neutron flux detected by the detector from the filtered neutron flux signal.

15. A system (2) for controlling a nuclear reactor including at least one neutron detector (4) configured to detect a neutron flux and to deliver a neutron flux signal representative of the detected neutron flux, and a processing device (6) according to claim 14 to calculate the neutron flux detected by the detector (4) and/or the rate of the variation of the neutron flux detected by the detector (4) from the neutron flux signal.

FIG. 1

FIG. 2

**EP 3 631 517 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2910689